# EUROPEAN PATENT APPLICATION

(11) **EP 1 837 940 A1**
(43) Date of publication of application: **26.09.2007**
(21) Application number: 06711531.1
(22) Date of filing: 11.01.2006
(51) Int. Cl.: H01M 8/04, H01M 8/02, H01M 8/10

(54) **FUEL CELL**

(30) Priority: 11.01.2005 JP 2005004176; 11.01.2005 JP 2005004177
(71) Applicant: KABUSHIKI KAISHA TOSHIBA, Tokyo 105-8001 (JP)
(72) Inventor: SHIMOYAMADA, Takashi, c/o Intellectual Property, Minato-ku, Tokyo 8001 (JP); KAN, Hirofumi, c/o Intellectual Property Division, Minato-ku, Tokyo 8001 (JP); NEGISHI, Nobuyasu, c/o Intellectual Property, Minato-ku, Tokyo 8001 (JP)
(74) Representative: Granleese, Rhian Jane
(86) International application number: PCT/JP2006/300182
(87) International publication number: WO 2006/075595

(57) **Abstract**

An electrode membrane structure includes a solid electrolyte membrane (1) of a polymer material, and a fuel electrode (2) and an air electrode (3) stacked on both sides of the solid electrolyte membrane. The fuel electrode (2) is formed of an anode catalyst layer (4) and a fuel electrode collector (6), and the air electrode (3) is formed of a cathode catalyst layer (5) and an air electrode collector (7). At the backside of the fuel electrode collector (6), a fuel tank (11) is defined between a casing (10a) and a fuel holding film (8). The interior of the fuel tank (11) is divided into a plurality of divisions by a partition to uniformly distribute liquid fuel to the fuel electrode (2). The liquid fuel (methanol) in the fuel tank (11) is absorbed and held by the fuel holding film (8), is dispersed through the fuel holding film (8) to the fuel electrode (2).

## Description

### Technical Field

The present invention relates to a fuel cell for generating electricity utilizing hydrogen ions that are separated from liquid fuel at a fuel electrode using a catalyst, and more particularly to a fuel cell that does not use positive transfer means, such as a pump for supplying liquid fuel to a fuel electrode.

### Background Art

In recent years, various attempts to use fuel cells as power supplies for various portable electronic devices, such as notebook personal computers and cellular phones, have been made in order to enable the devices and phones to be used for a long time without being charged. Fuel cells are characterized in that they can generate electricity using only fuel and air, and can continue extended generation of electricity merely by the replenishment of fuel. Therefore, if fuel cells can be made compact, they are extremely useful as energy sources for portable devices.

In direct methanol fuel cells (DMFCs), methanol having a high energy density is used as fuel, from which electricity is directly extracted using a catalyst and solid electrolyte membrane. Accordingly, direct methanol fuel cells do not need a modifying device, can be made compact, and can be treated more easily than those employing hydrogen. For these reasons, these cells are regarded as promising energy sources for compact portable devices.

Depending upon the fuel supply scheme, known DMFCs are classified into, for example, gas-supply DMFCs into which vaporized liquid fuel is supplied by, for example, a blower; liquid-supply DMFCs into which liquid fuel is directly supplied by, for example, a pump; and internal vaporization DMFCs in which supplied liquid fuel is firstly vaporized and then sent to the fuel electrode.

Jpn. Pat. Appln. KOKAI Publication No. 2004-319430 describes an example of the liquid-supply DMFC. This fuel cell comprises a plurality of electromotive sections, and a fuel reflux passage for uniformly supplying fuel to each electromotive section.

Jpn. Pat. Appln. KOKAI Publication No. 2000-106201 describes an example of the internal vaporization DMFC. This internal vaporization DMFC comprises a fuel permeation layer for holding liquid fuel, and a fuel vaporization layer for diffusing a gaseous component contained in the liquid fuel held in the fuel permeation layer. The vaporized fuel is supplied from the fuel vaporization layer to a fuel electrode. In this publication, a methanol aqueous solution, in which methanol and water are mixed at a mol ratio of 1:1, is used as the liquid fuel, and both water and methanol in a gaseous state are supplied to the fuel electrode. Such a fuel cell using a methanol aqueous solution as fuel is disadvantageous in that it cannot exhibit sufficient output characteristics because of the difference in rate of vaporization between methanol and water. In order to enhance the output characteristics and further reduce the size, fuel cells using pure methanol as fuel have now been developed.

In addition, passive fuel cells that do not use active transfer means, such as a fuel pump, to supply liquid fuel to the fuel electrode have been developed as compact fuel cells mainly used in mobile devices. In these fuel cells, it is difficult to fix the attitude during use, since the mobile devices are used in various attitude. For instance, portable compact music players are often used in a pocket or bag, and hence their attitude cannot be limited. The same can be said of the attitude of the fuel cells contained in the players. Therefore, when a passive fuel cell using liquid fuel is used in a mobile device, it is an important technical challenge how liquid fuel is uniformly supplied to the fuel electrode of the cell. If liquid fuel is not uniformly supplied to the fuel electrode, such a problem as reduction of output may well occur. Further, if such a state continues, the path of protons may be biased in the solid electrolyte membrane, or part of the solid electrolyte membrane dry out, thereby reducing the life of the cell.

### Disclosure of Invention

The present invention has been developed in view of the above-mentioned problems that may occur in a passive fuel cell that does not use transfer means, such as a pump, for supplying liquid fuel to a fuel electrode. It is an object of the invention to suppress imbalance of distribution of liquid fuel (to be supplied to a fuel electrode) in a passive fuel cell even when the attitude of the cell is hard to fix during use, thereby enhancing the output characteristics and increasing the life of the cell.

In accordance with an embodiment of the invention, there is provided a fuel cell in which a fuel component of liquid fuel is supplied from a fuel tank to a fuel electrode, comprising:
a solid electrolyte membrane having an ion inductivity;
a fuel electrode stacked on one side of the solid electrolyte membrane and including an anode catalyst layer supplied with a fuel component of liquid fuel;
an air electrode stacked on another side of the solid electrolyte membrane and including a cathode catalyst layer; and
a fuel tank opposing the solid electrolyte membrane with the fuel electrode interposed therebetween, and used to contain the liquid fuel,
the fuel tank being divided into a plurality of divisions, each division having one wall surface formed of the fuel electrode.

As described above, since the interior of the fuel tank is divided into a plurality of divisions, liquid fuel is prevented from concentrating at one portion of the fuel tank and is uniformly dispersed in the divisions, even when the attitude of the fuel cell (and accordingly, the attitude of the fuel electrode and fuel tank) is not horizontal during use. Thus, imbalance in the distribution of the liquid fuel in the fuel tank can be suppressed, thereby preventing a reduction of the output or cell life.

Preferably, the surface of the fuel electrode facing the fuel tank is coated with a fuel holding film which absorbs the liquid fuel and disperses the liquid fuel to the fuel electrode. The fuel holding film attached to the fuel electrode further enhances the uniform distribution of the liquid fuel to the fuel electrode.

Preferably, the plurality of divisions are configured, into which the liquid fuel can be injected through a single common fuel injection hole.

More preferably, the plurality of divisions communicates with at least another one of the divisions via an opening formed in a partition which defines the plurality of divisions.

By thus coupling the divisions to each other, the liquid fuel is permitted to move between the divisions within a range, in which not all liquid fuel moves, when the attitude of the fuel cell is changed. As a result, the remaining liquid fuel can be uniformly distributed in the divisions.

In accordance with another embodiment of the invention, there is provided a fuel cell in which a fuel component of liquid fuel is supplied from a fuel tank to a fuel electrode, comprising:
a solid electrolyte membrane having an ion inductivity;
a fuel electrode stacked on one side of the solid electrolyte membrane and including an anode catalyst layer supplied with a fuel component of liquid fuel;
an air electrode stacked on another side of the solid electrolyte membrane and including a cathode catalyst layer; and
a fuel tank opposing the solid electrolyte membrane with the fuel electrode interposed therebetween, and used to contain the liquid fuel,
the fuel tank being formed of a passage angled in a plane parallel to the fuel electrode.

As described above, since the fuel tank is formed of an angled passage, liquid fuel is prevented from concentrating at one portion of the fuel tank and is uniformly dispersed in a plurality of portions in the passage, even when the attitude of the fuel cell (and accordingly, the attitude of the fuel electrode and fuel tank) is not horizontal during use, for example. Thus, imbalance in the distribution of the liquid fuel in the fuel tank can be suppressed, thereby preventing a reduction of the output or cell life.

Preferably, the surface of the fuel electrode facing the fuel tank is coated with a fuel holding film which absorbs the liquid fuel and disperses the liquid fuel to the fuel electrode. The fuel holding film attached to the fuel electrode further enhances the uniform distribution of the liquid fuel to the fuel electrode.

Preferably, the fuel tank is formed of a plurality of passages, each of the passages including a plurality of portions angled in a plane parallel to the fuel electrode.

More preferably, the passage has a cross section gradually or stepwise increased from a liquid-fuel inlet of the passage to a terminal of the passage.

In the fuel cell of the invention, the imbalance of distribution in the cell of the liquid fuel to be supplied to the fuel electrode can be suppressed, thereby enhancing the output characteristics and increasing the life of the cell.

### Brief Description of Drawings

FIG. 1 is a sectional view illustrating a fuel cell according to an embodiment of the invention;
FIG. 2 is a view illustrating the layout of a fuel tank incorporated in the fuel cell shown in FIG. 1;
FIG. 3 is a view illustrating a layout example of the fuel tank incorporated in the fuel cell of the invention;
FIG. 4 is a view illustrating another layout example of the fuel tank incorporated in the fuel cell of the invention;
FIG. 5 is a view illustrating yet another layout example of the fuel tank incorporated in the fuel cell of the invention;
FIG. 6 is a view illustrating yet another layout example of the fuel tank incorporated in the fuel cell of the invention;
FIG. 7 is a view illustrating the layout of a fuel tank incorporated in a fuel cell as a comparative example;
FIG. 8 is a perspective view illustrating the shape of a partition employed in the fuel tank shown in FIG. 3;
FIG. 9 is a sectional view illustrating a fuel cell according to another embodiment of the invention;
FIG. 10 is the layout of a fuel tank incorporated in the fuel cell shown in FIG. 9;
FIG. 11 is a view illustrating a layout example of the fuel tank incorporated in the fuel cell of the invention;
FIG. 12 is a view illustrating another layout example of the fuel tank incorporated in the fuel cell of the invention; and
FIG. 13 is a view illustrating yet another layout example of the fuel tank incorporated in the fuel cell of the invention.

### Best Mode for Carrying Out the Invention

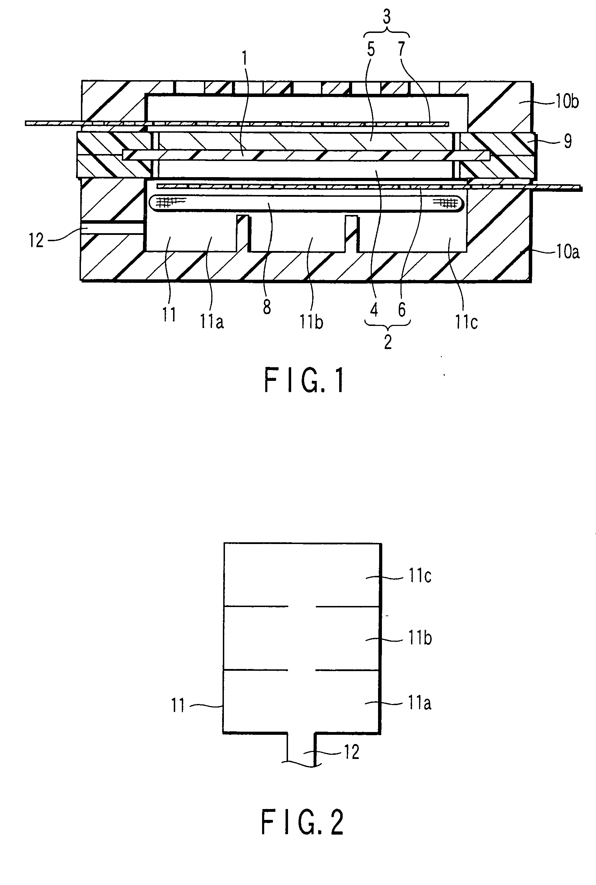

FIG. 1 (sectional view) shows a fuel cell according to an embodiment of the invention. In the figure, reference number 1 denotes a solid electrolyte membrane, reference number 2 a fuel electrode, reference number 3 an air electrode, and reference number 11 a fuel tank.

A membrane electrode assembly (MEA) as an electromotive section comprises a solid electrolyte membrane 1, and a fuel electrode 2 (anode) and air electrode 3 (cathode) stacked on both sides of the membrane. The fuel electrode 2 includes an anode catalyst layer 4 and fuel electrode collector 6. The air electrode 3 includes a cathode catalyst layer 5 and air electrode collector 7.

The anode and cathode catalyst layers 4 and 5 are formed of carbon paper coated with a catalyst. The catalyst-coated surface of the carbon paper is thermocompression-bonded to the solid electrolyte membrane 1. The catalyst layers are obtained, for example, as follows: A perfluorocarbon sulfonic acid solution serving as a proton conductive resin, and water and methoxy propanol serving as a dispersing medium are added to anode or cathode catalyst particle supported carbon black, thereby preparing paste with the catalyst supported carbon black dispersed therein. Porous carbon paper as a cathode gas dispersed layer is coated with the paste, thereby providing a catalyst layer.

On the backside (the surface remote from the solid catalytic membrane 1) of the anode catalyst layer 4, the fuel electrode collector 6 for extracting current to the outside is stacked. Similarly, on the backside (the surface remote from the solid catalytic membrane 1) of the cathode catalyst layer 5, the air electrode collector 7 for extracting current to the outside is stacked. To supply fuel to the anode catalyst layer 4 and supply air to the cathode catalyst layer 5, a large number of through holes are formed in the fuel electrode collector 6 and air electrode collector 7. Gold-plated copper plates, for example, are used for the anode and cathode catalyst layers 4 and 5. Thus, the solid electrolytic membrane 1, fuel electrode 2 and air electrode 3 are formed integral into a membrane electrode assembly.

The membrane electrode assembly is held between casings 10a and 10b of plastic (e.g., PPS) with rubber seals 9 interposed therebetween, and is fixed by, for example, screws. The rubber seals 9 are in contact with the parts of the solid electrolyte membrane 1 that protrude from the anode catalyst layer 4 and cathode catalyst layer 5, thereby sealing the interior of the casings 10a and 10b at the contact parts.

On the backside of the fuel electrode collector 6 (the surface remote from the anode catalyst layer 4), a fuel holding film 8 formed of nonwoven cloth is further attached, with an evaporating film (gas-liquid separation film) (not shown) for evaporating liquid fuel interposed therebetween. A fuel tank 11 is formed between the casing 10a at the fuel electrode 2 side and the fuel holding film 8. The liquid fuel (methanol) in the fuel tank 11 is absorbed in the fuel holding film 8. Part of the fuel is temporarily held in the fuel holding film 8 and passes through the fuel holding film 8. Further, an evaporated portion of the liquid fuel, evaporated through the evaporating film (gas-liquid separation film), reaches each element of the fuel electrode 2.

In this specification, the expression "the fuel electrode is used as one wall surface that defines the fuel tank" also means that the layer closest to the fuel tank 11 is used as the one wall surface, when another or other layers are interposed between the fuel tank and fuel electrode.

A fuel injection hole 12 for replenishing the liquid fuel into the fuel tank 11 is formed in the sidewall of the casing 10a close to the fuel electrode 2. The casing 10b close to the air electrode 3 has a large number of small holes for introducing the air from the outside.

FIG. 2 is a plan view illustrating the fuel tank 11 of the fuel cell shown in FIG. 1. In this example, the fuel tank 11 includes three divisions 11a to 11c. The fuel injection hole 12 is provided in the division 11a, and the divisions 11a and 11b communicate with each other and the divisions 11b and 11c communicate with each other via respective openings formed in respective partitions.

The liquid fuel injected through the fuel injection hole 12 flows into the divisions 11b and 11c from the division 11a through the openings formed in the partitions. Further, the liquid fuel moves between the divisions 11a to 11c, depending, for example, upon a change in the attitude of the fuel cell and upon the balance of remaining part of the liquid fuel in the divisions 11a to 11c. As a result, imbalanced distribution of the liquid fuel in the fuel tank 11 can be suppressed.

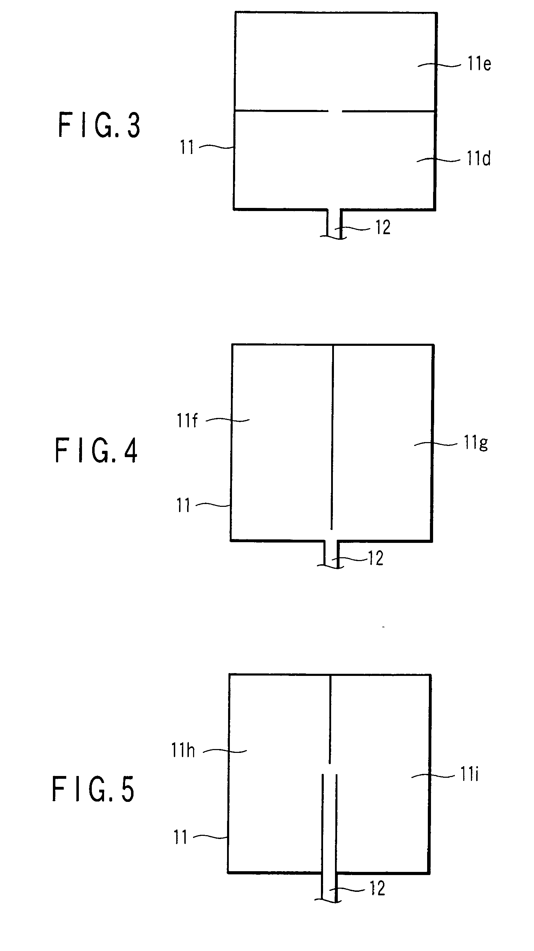

As described above, in the fuel cell of the invention, to uniformly supply the liquid fuel to the fuel electrode 2, the fuel tank 11 is divided into a plurality of divisions. FIGS. 3 to 6 show other layout examples of the fuel tank 11.

In the example of FIG. 3, the fuel tank 11 is formed of two divisions 11d and 11e. The fuel injection hole 12 is provided in the division 11d. The two divisions 11d and 11e communicate with each other via an opening formed in the partition. The liquid fuel is introduced into the division 11d through the fuel injection hole 12, and flows therefrom into the other division 11e through the opening.

In the example of FIG. 4, the fuel tank 11 is formed of two divisions 11f and 11g like the example of FIG. 3. However, the fuel injection hole 12 is provided at the boundary of the divisions 11f and 11g, and the liquid fuel is directly replenished into the divisions 11f and 11g through the fuel injection hole 12. The two divisions 11f and 11g communicate with each other via an opening formed at the position adjacent to the front end of the fuel injection hole 12.

In the example of FIG. 5, the fuel tank 11 is formed of two divisions 11h and 11i like the example of FIG. 4. However, the fuel injection hole 12 extends along the boundary of the divisions 11h and 11i to the center of the fuel tank 11, and opens at the center of the partition. As a result, the liquid fuel is directly replenished into the two divisions 11h and 11i through the fuel injection hole 12. The two divisions 11h and 11i communicate with each other via an opening formed at the center of the partition.

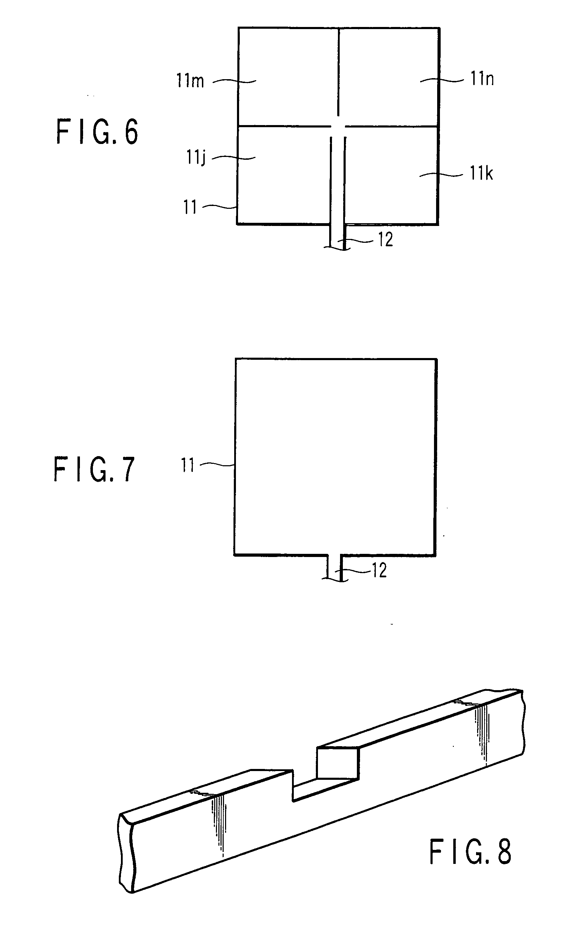

In the example of FIG. 6, the fuel tank 11 comprises four divisions 11j, 11k, 11m and 11n. Namely, the interior of the fuel tank 11 is divided into four divisions by vertical and lateral partitions. The fuel injection hole 12 extends along the boundary of the divisions 11j and 11k to the center of the fuel tank 11, and opens near the intersection of the partitions. As a result, the liquid fuel is directly replenished into the four divisions 11j, 11k, 11m and 11n through the fuel injection hole 12. The four divisions 11j, 11k, 11m and 11n communicate with each other via openings formed in the partitions near the intersection thereof.

The position of the fuel injection hole is not limited to the center of a sidewall of the casing, but may be another position, such as a sidewall end, if it accords to the fuel cell.

The partition(s) that divides the fuel tank into a plurality of divisions may be formed integral with the fuel tank, or be formed as a separate member and afterwards combined with the fuel tank. In particular, in view of efficiency of movement of the liquid fuel at the opening of the partition, or in view of facility of manufacturing, it is preferable that the partition(s) be formed integral with the fuel tank.

The shape and/or number of the openings formed in the partition(s) that divides the interior of the fuel tank into a plurality of divisions can be changed appropriately depending upon the fuel cell.

If a plurality of membrane electrode assemblies are provided on the same plane, it is preferable that the partition for dividing the interior of the fuel tank into a plurality of divisions be provided between the assemblies. However, depending upon circumstances, the partition may be provided just under the assemblies.

Although in the above description, the fuel component supplied to the anode catalyst layer is a gas, it is not limited to a gas, but may be a liquid. Various materials can be used depending upon the configuration of the fuel cell.

Further, the liquid fuel contained in the fuel tank 11 is not limited to methanol fuel, but may be other liquid fuels, for example, ethanol fuel such as an ethanol aqueous solution or pure ethanol, propanol fuel such as a propanol aqueous solution or pure propanol, glycol fuel such as a glycol aqueous solution or pure glycol, dimethylethyl, or a formic acid. In any case, a liquid fuel corresponding to each fuel cell is contained.

A description will now be given of the results of tests conducted to estimate the performances of fuel cells according to the invention. In the tests, the solid electrolyte membrane 1 was 70 mm square, and the anode and cathode catalyst layers 4 and 5 were 60 mm square. Accordingly, the anode and cathode catalyst layers 4 and 5 protrude by 5 mm from each side of the solid electrolyte membrane 1. The fuel tank 11 was 60 mm square and 3 mm deep.

### (Sample 1)

A fuel cell with a fuel tank of the layout shown in FIG. 3 was prepared. FIG. 8 shows the shape of its partition. The partition has a notch at the center, which enables fuel to move between the divisions defined by the partition. This notch or opening has a length of 5 mm and a height of 1.5 mm, and is designed so that a portion of the partition, which has a height of 1.5 mm, stands from the bottom of the fuel tank 11.

### (Sample 2)

A fuel cell with a fuel tank of the layout shown in FIG. 4 was prepared. In this example, an opening for enabling fuel to move is formed at an end of the partition corresponding to the front end of the fuel injection hole, the opening having the same size as that of sample 1.

### (Sample 3)

A fuel cell with a fuel tank of the layout shown in FIG. 5 was prepared. In this example, an opening for enabling fuel to move is formed at a portion of the partition corresponding to the center of the fuel tank, the opening having the same size as that of sample 1.

### (Sample 4)

A fuel cell with a fuel tank of the layout shown in FIG. 6 was prepared. In this example, an opening for enabling fuel to move is formed at the intersection of the partitions corresponding to the center of the fuel tank, the opening having the same size as that of sample 1.

### (Sample 5)

For comparison, a fuel cell including a fuel tank with no divisions as shown in FIG. 7 was prepared.

50 fuel cells similar to each of the above-mentioned samples shown in FIGS. 3 to 7 were produced and subjected to the following estimation tests:

Firstly, the fuel cells were each horizontally placed on a flat table, and their initial outputs were measured. A 20% by weight methanol aqueous solution was used as the liquid fuel, and the output obtained when each fuel cell was subjected to discharge of 1A was set as an initial output.

After confirming the initial output, 5 cc of liquid fuel, which is substantially half the volume of the fuel tank, was injected into the tank, discharge of a constant current of 1A was continued until the voltage reached the 0.2V. At this time, power generation was conducted with the main bodies of the fuel cells inclined at 15 degrees. Concerning 25 ones of the 50 fuel cells, each main body was inclined in a first direction around the vertical axis so that the left side, when viewed from the fuel inlet, was lower than the right side. Further, concerning the other 25 fuel cells, each main body was inclined in a second direction around the lateral axis so that the opposite side of the fuel inlet was lower. When the voltage reached 0.2V, discharge was stopped. Thereafter, 5 cc of liquid fuel was injected again, and discharge was repeated under the same conditions until the total discharge time reached 500 hours.

After power generation of 500 hours in total, the output was confirmed, with each fuel cell set horizontal as in the same way as when the initial output was confirmed. Table 1 shows the ratio (average value) of the output of each sample after 500-hour discharge to the initial output.

**Table 1(Output Maintenance Ratio After 500-hour Discharge)**

| | First-directionally Inclined | Second-directionally Inclined |
|---|---|---|
| Sample 1 | 76.0% | 86.5% |
| Sample 2 | 88.8% | 77.1% |
| Sample 3 | 92.8% | 77.8% |
| Sample 4 | 93.5% | 92.8% |
| Sample 5 | 76.2% | 75.9% |

As can be understood from table 1, the output maintenance ratio of sample 5 (FIG. 7), in which the interior of the fuel tank is not divided, is about 76% regardless of the attitude. In contrast, in samples 1 to 3 (FIGS. 3 to 5), in which the interior is divided into two equal divisions by the partition, the advantage obtained when the main body was inclined so that the surface of the partition was inclined around the horizontal axis within the surface was confirmed, i.e., it was confirmed that the output maintenance ratio after 500-hour discharge is enhanced. These results seem to mean that in sample 5, the liquid fuel can easily move when the fuel cell is inclined, and hence the distribution of the liquid fuel be greatly biased, thereby causing significant reduction of output. In contrast, in samples 1 to 3 in which the partition limits the movement of the liquid fuel to some extent, imbalance in the fuel distribution is suppressed to thereby suppress reduction of the output compared to sample 5.

Further, compared to sample 1, reduction in the outputs of samples 2 and 3 is small. This is probably because the degree of imbalance in the fuel distribution is further reduced and hence the output maintenance ratio is further enhanced, since the fuel is simultaneously injected into a plurality of divisions of the fuel tank, or is injected into a portion near the center of the electrode. Furthermore, in sample 4 in which the interior of the fuel tank is equally divided into four divisions, the degree of imbalance in the fuel distribution is further reduced since the fuel is distributed from the center of the tank to each division, with the result that reduction of output can be suppressed in both the case of the first-directional inclination and the case of the second-directional inclination.

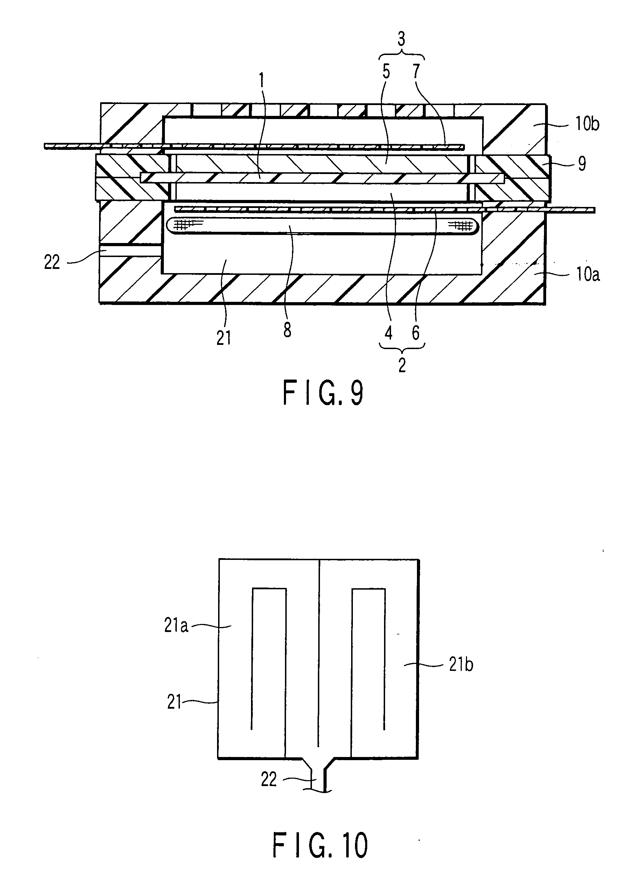

FIG. 9 (sectional view) shows a fuel cell according to another embodiment of the invention. In the figure, reference number 1 denotes a solid electrolyte membrane, reference number 2 a fuel electrode, reference number 3 an air electrode, and reference number 21 a fuel tank.

A membrane electrode assembly (MEA) as an electromotive section comprises a solid electrolyte membrane 1 made of a high-polymer material, and a fuel electrode 2 (anode) and air electrode 3 (cathode) stacked on both sides of the membrane. The fuel electrode 2 includes an anode catalyst layer 4 and fuel electrode collector 6. The air electrode 3 includes a cathode catalyst layer 5 and air electrode collector 7.

The anode and cathode catalyst layers 4 and 5 are formed of carbon paper coated with a catalyst. The catalyst-coated surface of the carbon paper is thermocompression-bonded to the solid electrolyte membrane 1. The catalyst layers are obtained, for example, as follows: A perfluorocarbon sulfonic acid solution serving as a proton conductive resin, and water and methoxy propanol serving as a dispersing medium are added to anode or cathode catalyst particle supported carbon black, thereby preparing paste with the catalyst supported carbon black dispersed therein. Porous carbon paper as a cathode gas dispersed layer is coated with the paste, thereby providing a catalyst layer.

On the backside (the surface remote from the solid catalytic membrane 1) of the anode catalyst layer 4, the fuel electrode collector 6 for extracting current to the outside is stacked. Similarly, on the backside (the surface remote from the solid catalytic membrane 1) of the cathode catalyst layer 5, the air electrode collector 7 for extracting current to the outside is stacked. To supply fuel to the anode catalyst layer 4 and supply air to the cathode catalyst layer 5, a large number of through holes are formed in the fuel electrode collector 6 and air electrode collector 7. Gold-plated copper plates, for example, are used for the anode and cathode catalyst layers 4 and 5. Thus, the solid electrolytic membrane 1, fuel electrode 2 and air electrode 3 are formed integral into a membrane electrode assembly.

The membrane electrode assembly is held between casings 10a and 10b of plastic (e.g., PPS) with rubber seals 9 interposed therebetween, and is fixed by, for example, screws. The rubber seals 9 are in contact with the parts of the solid electrolyte membrane 1 that protrude from the anode catalyst layer 4 and cathode catalyst layer 5, thereby sealing the interior of the casings 10a and 10b at the contact parts.

On the backside of the fuel electrode collector 6 (the surface remote from the anode catalyst layer 4), a fuel holding film 8 formed of nonwoven cloth is further attached, with an evaporating film (gas-liquid separation film) (not shown) for evaporating liquid fuel interposed therebetween. A fuel tank 21 is formed between the casing 10a at the fuel electrode 2 side and the fuel holding film 8. The liquid fuel (methanol) in the fuel tank 21 is absorbed in the fuel holding film 8. Part of the fuel is temporarily held in the fuel holding film 8 and passes through the fuel holding film 8. Further, an evaporated portion of the liquid fuel, evaporated through the evaporating film (gas-liquid separation film), reaches each element of the fuel electrode 2.

In this specification, the expression "the fuel electrode is used as one wall surface that defines the fuel tank" also means that the layer closest to the fuel tank 21 is used as the one wall surface, when another or other layers are interposed between the fuel tank and fuel electrode.

A fuel injection hole 22 for replenishing the liquid fuel into the fuel tank 21 is formed in the sidewall of the casing 10a close to the fuel electrode 2. The casing 10b close to the air electrode 3 has a large number of small holes for introducing the air from the outside.

FIG. 10 is a plan view illustrating the fuel tank 21 of the fuel cell shown in FIG. 1. In this example, the fuel tank 21 includes two fuel passages 21a and 21b. The fuel injection hole 22 is provided in common for the two fuel passages 21a and 21b. The two fuel passages 21a and 21b communicate with each other at the inlet. In the figure, the fuel passage 21a is extended upward from the inlet, reaches the upper portion of the fuel tank 21, bent leftward therefrom, reaches the right side of the fuel tank 21, bent downward therefrom, reaches the lower side of the fuel tank 21, bent rightward, and extended upward to the position slightly away from the upper side and left side. The fuel passage 21b is formed as a reflection of the fuel passage 21a with respect to the centerline, and is terminated at the position slightly away from the upper side and right side. Thus, the fuel passages 21a and 21b extend parallel to the fuel electrode 2, bent at four positions, so that they cover the respective half portions of the fuel electrode 2.

The liquid fuel in the fuel tank 21 moves in accordance with a change in the attitude of the fuel cell and in the amounts of fuel left in the fuel passages 21a and 21b, and is distributed into a plurality of divisions defined in the fuel tank 21. As a result, imbalance in the distribution of fuel in the fuel tank 21 can be suppressed, thereby preventing reduction of the output/life of the cell.

The position of the fuel injection hole is not limited to the center of a sidewall of the casing, but may be changed in accordance with the design of the fuel cell.

The partitions that define the fuel passages may be formed integral with the fuel tank, or be formed as separate members and afterwards combined with the fuel tank. In particular, in view of efficiency of movement of the liquid fuel, or in view of facility of manufacturing, it is preferable that the partitions be formed integral with the fuel tank.

If a plurality of membrane electrode assemblies are provided on the same plane, it is preferable that the partitions for defining fuel passages in the fuel tank be provided between the assemblies. However, depending upon circumstances, the partitions may be provided just under the assemblies.

Further, a fuel tank including a plurality of divisions as shown in FIG. 2, and a fuel tank including fuel passages as shown in FIG. 10 may be used individually as described above, or may be combined.

Although in the above description, the fuel component supplied to the anode catalyst layer is a gas, it is not limited to a gas, but may be a liquid. Various materials can be used depending upon the configuration of the fuel cell.

Further, the liquid fuel contained in the fuel tank 11 is not limited to methanol fuel, but may be other liquid fuels, for example, ethanol fuel such as an ethanol aqueous solution or pure ethanol, propanol fuel such as a propanol aqueous solution or pure propanol, glycol fuel such as a glycol aqueous solution or pure glycol, dimethylethyl, or a formic acid. In any case, a liquid fuel corresponding to each fuel cell is contained.

A description will now be given of the results of tests conducted to estimate the performances of passive fuel cells according to the invention. In the tests, the solid electrolyte membrane 1 was 70 mm square, and the anode and cathode catalyst layers 4 and 5 were 60 mm square. Accordingly, the anode and cathode catalyst layers 4 and 5 protrude by 5 mm from each side of the solid electrolyte membrane 1. The fuel tank 21 was 60 mm square and 3 mm deep.

### (Sample 6)

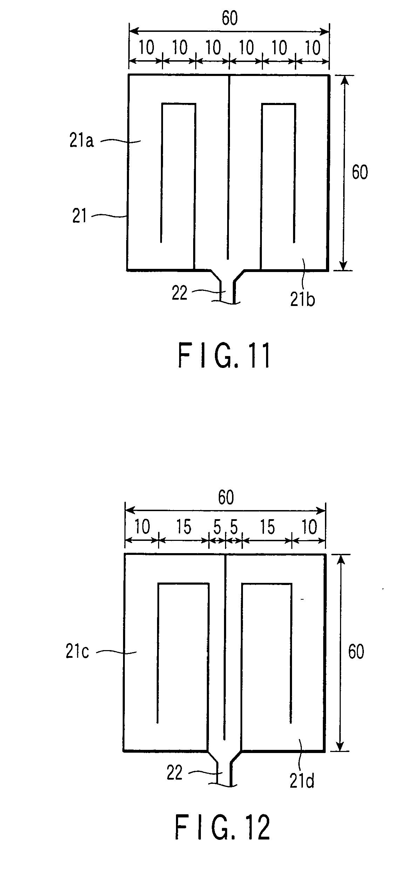

A fuel cell with a fuel tank 21 of the layout shown in FIG. 11 was prepared. This layout is substantially the same as that shown in FIG. 10. Two fuel passages 21a and 21b have a constant width of 10 mm.

### (Sample 7)

A fuel cell with a fuel tank 21 of the layout shown in FIG. 12 was prepared. As shown in FIG. 12, two fuel passages 21c and 21d have their widths stepwise increased from the inlet of liquid fuel to their terminals. More specifically, the widths of the passages 21c and 21d are 5 mm, 10 mm and 15 mm at their inlets, intermediate portions and terminals, respectively.

### (Sample 8)

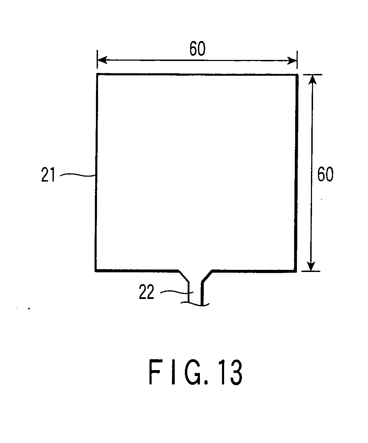

For comparison, a fuel cell including a fuel tank 21 with no fuel passages as shown in FIG. 13 was prepared.

50 fuel cells similar to each of the above-mentioned samples shown in FIGS. 11 to 13 were produced and subjected to the following estimation tests:

Firstly, the fuel cells were each horizontally placed on a flat table, and their initial outputs were measured. A 20% by weight methanol aqueous solution was used as the liquid fuel, and the output obtained when each fuel cell was subjected to discharge of 1A was set as an initial output.

After confirming the initial output, 5 cc of liquid fuel, which is substantially half the volume of the fuel tank, was injected into the tank, discharge of a constant current of 1A was continued until the voltage reached the 0.2V. At this time, power generation was conducted with the main bodies of the fuel cells inclined at 15 degrees. Concerning 25 ones of the 50 fuel cells, each main body was inclined in a first direction around the vertical axis so that the left side, when viewed from the fuel inlet, was lower than the right side. Further, concerning the other 25 fuel cells, each main body was inclined in a second direction around the lateral axis so that the opposite side of the fuel inlet was lower. When the voltage reached 0.2V, discharge was stopped. Thereafter, 5 cc of liquid fuel was injected again, and discharge was repeated under the same conditions until the total discharge time reached 500 hours.

After power generation of 500 hours in total, the output was confirmed, with each fuel cell set horizontal as in the same way as when the initial output was confirmed. Table 1 shows the ratio (average value) of the output of each sample after 500-hour discharge to the initial output.

**Table 2(Output Maintenance Ratio After 500-hour Discharge)**

| | First-directionally Inclined | Second-directionally Inclined |
|---|---|---|
| Sample 6 | 89.8% | 80.0% |
| Sample 7 | 94.8% | 88.2% |
| Sample 8 | 76.2% | 75.9% |

As can be understood from table 2, the output maintenance ratio of sample 8 (FIG. 13: comparative example), in which the interior of the fuel tank is not divided, is about 76% regardless of the attitude. In contrast, in samples 6 and 7 (FIGS. 11 and 12), in which the fuel tank is formed of a fuel passage bent at several positions, it was confirmed that the output maintenance ratio after 500-hour discharge is enhanced. These results seem to mean that in sample 8, the liquid fuel can easily move when the fuel cell is inclined, and hence the distribution of the liquid fuel be greatly biased, thereby causing significant reduction of output. In contrast, in samples 6 and 7 in which the fuel passage limits the movement of the liquid fuel to some extent, imbalance in the fuel distribution is suppressed to thereby suppress reduction of the output compared to sample 8.

Further, compared to sample 6, reduction in the outputs of sample 7 is small. This is probably because in sample 7, fuel is sufficiently distributed even to the terminal of the fuel passage by virtue of the narrowed inlet of the passage, the fuel being otherwise insufficient at the terminal since the amount of the fuel injected is about half the volume of the fuel tank.

## Claims

1. A fuel cell in which a fuel component of liquid fuel is supplied from a fuel tank to a fuel electrode, comprising:
a solid electrolyte membrane having an ion inductivity;
a fuel electrode stacked on one side of the solid electrolyte membrane and including an anode catalyst layer supplied with a fuel component of liquid fuel;
an air electrode stacked on another side of the solid electrolyte membrane and including a cathode catalyst layer; and
a fuel tank opposing the solid electrolyte membrane with the fuel electrode interposed therebetween, and used to contain the liquid fuel,
the fuel tank being divided into a plurality of divisions, each division having one wall surface formed of the fuel electrode.

2. The fuel cell according to claim 1, wherein the surface of the fuel electrode facing the fuel tank is coated with a fuel holding film which absorbs the liquid fuel and disperses the liquid fuel to the fuel electrode.

3. The fuel cell according to claim 1, wherein the plurality of divisions are configured, into which the liquid fuel can be injected through a single common fuel injection hole.

4. The fuel cell according to claim 1, wherein each of the plurality of divisions communicates with at least another one of the divisions via an opening formed in a partition which defines the plurality of divisions.

5. The fuel cell according to claim 1, wherein an interior of the fuel tank is divided into at least four divisions by at least two partitions intersecting each other, and each of the four divisions communicating with at least another one of the four divisions via an opening formed in the two partitions.

6. The fuel cell according to claim 1, wherein the fuel component supplied to the anode catalyst layer is liquid or gas.

7. A fuel cell in which a fuel component of liquid fuel is supplied from a fuel tank to a fuel electrode, comprising:
a solid electrolyte membrane having an ion inductivity;
a fuel electrode stacked on one side of the solid electrolyte membrane and including an anode catalyst layer supplied with a fuel component of liquid fuel;
an air electrode stacked on another side of the solid electrolyte membrane and including a cathode catalyst layer; and
a fuel tank opposing the solid electrolyte membrane with the fuel electrode interposed therebetween, and used to contain the liquid fuel,
the fuel tank being formed of a passage angled in a plane parallel to the fuel electrode.

8. The fuel cell according to claim 7, wherein the surface of the fuel electrode facing the fuel tank is coated with a fuel holding film which absorbs the liquid fuel and disperses the liquid fuel to the fuel electrode.

9. The fuel cell according to claim 7, wherein the fuel tank is formed of a plurality of passages, each of the passages including a plurality of portions angled in a plane parallel to the fuel electrode.

10. The fuel cell according to claim 7, wherein the passage has a cross section gradually or stepwise increased from a liquid-fuel inlet of the passage to a terminal of the passage.

11. The fuel cell according to claim 7, wherein the fuel component supplied to the anode catalyst layer is liquid or gas.
